# NEW EUROPEAN PATENT SPECIFICATION

(11) **EP 1 081 389 B2**
(45) Date of publication and mention of the opposition decision: **19.06.2019**
(45) Mention of the grant of the patent: 15.12.2004
(21) Application number: 00305766.8
(22) Date of filing: 07.07.2000
(51) Int. Cl.: F15B 13/00, H01H 50/02

(54) **Manifold-type solenoid valve with relay unit**
Magnet-Wegeventil für einen Verteilerblock mit einer Relais-Vorrichtung
Distributeur à solénoide du type plaque de distribution avec unité de relais

(30) Priority: 16.07.1999 JP 20341099
(43) Date of publication of application: 07.03.2001
(73) Proprietor: SMC CORPORATION, Minato-ku, Tokyo (JP)
(72) Inventor: Hayashi, Bunya, c/o SMC Corp. Tsukuba Tech. Center, Tsukuba-gun, Ibaraki (JP); Ishikawa, Makoto, c/o SMC Corp. Tsukuba Tech. Ctr, Tsukuba-gun, Ibaraki (JP)
(74) Representative: Howe, Steven

(56) References cited:
- EP-A2- 0 915 275
- DE-A- 4 312 729
- DE-A1- 4 222 634
- DE-A1- 4 312 729
- DE-C- 19 722 925
- JP-A- H0 313 465
- US-A- 4 095 864
- US-A- 4 095 864
- FESTO AG: DER PNEUMATIC-KATALOG 97/98, ESSLINGEN

## Description

The present invention relates to a manifold-type solenoid valve in which a solenoid valve for controlling a fluid pressure device and a relay unit for controlling an electrical device are installed on a manifold block.

In various types of automation apparatuses, a fluid pressure driving actuator such as an air cylinder and an electrical device such as an electrical motor are often used together. In general, such an actuator and electrical device are each individually controlled by a manifold-type solenoid valve, and a relay unit. In many cases, since the solenoid valve and relay unit are typically separately installed at different places, an installation location must be provided for each unit resulting in an increase in the overall size of the automation apparatus.

In addition, if the installation locations for the solenoid valve and the relay unit are separated, not only is the wiring for feeding power or an operation signal separated and complicated, but also the solenoid valve and the relay unit must be separately handled, with the result that the installation and maintenance, such as checking operation, are extremely troublesome.

It is an object of the present invention to provide a manifold-type solenoid valve with a relay unit, in which the manifold-type solenoid valve and the relay unit are integrated in one place so that the number of installation locations is reduced, control and wiring are simplified, and the solenoid valve and the relay unit can be handled simultaneously.

The present invention is defined by claim 1. According to the present invention, there is provided a manifold-type solenoid valve including a plurality of solenoid valves for controlling a fluid pressure device by switching channels, at least one relay unit for controlling an electrical device by a relay that is opened and closed, and a plurality of manifold blocks coupled together and each having substantially the same structure and one of the solenoid valves or the relay unit installed on a mounting surface thereof.

The plurality of manifold blocks each have the mounting surface on which a plurality of channel holes for supplying a solenoid valve with pressure fluids are opened, and a power-feeding connector for connecting a power-receiving connector provided for the solenoid valve. The relay unit has a housing that is formed so as to be mounted on the mounting surface of the manifold block within the block width, the relay that is built in the housing and is electrically opened and closed, a power-receiving connector that can be connected to the power-feeding connector of the manifold block, and a sealing section for sealing each channel hole on the mounting surface.

A manifold-type solenoid valve with the foregoing construction is arranged to mount a relay unit on a manifold block for mounting a solenoid valve, thereby enabling a solenoid valve for controlling fluid pressure device and a relay unit for controlling an electrical device to be integrated in one device. Thus, not only is no separate installation location for the relay unit required, but also the energising system can be unified so that the control system and wiring can be simplified. Further, by integrating the relay unit and the solenoid valve with respect to the installation location and electrical supply, the relay unit and the solenoid valve or valves can be simultaneously handled, and the installation and maintenance, such as checking operation, can be easily performed.

Preferably, the housing of the relay unit is formed to have substantially the same outward shape as the solenoid valve.

According to one embodiment, the housing of the relay unit has a hollow section air-tightly sealed by a cover, and the relay is enclosed in the hollow section. One end surface in a longitudinal direction of the housing serves as an output surface for connecting the relay to the electrical device, and a cord or a connector connecting to the relay is led to the outside from the output surface in a air-tightly sealed state.

According to another embodiment, the manifold blocks each have a plurality of fluid channels which are connected to each channel hole on the mounting surface and are connected together by coupling the manifold blocks, and male and female connectors which are electrically connected together for transmitting electrical power and a serial signal for controlling the solenoid valve, wherein the male connector is provided on one side surface of the manifold block and the female connector is provided on the opposite side surface thereof. When the manifold blocks are coupled, the male connector and the female connector of the adjacent manifold block are connected together.

The invention will now be further described by way of example with reference to the accompanying drawings in which:
Fig. 1 is an exploded perspective view showing an embodiment of a manifold-type solenoid valve with a relay unit according to the present invention.
Fig. 2 is a cross-sectional view of the relay unit according to the embodiment.
Fig. 3 is an exploded perspective view of the relay unit in Fig. 2.
Fig. 4 is a circuit diagram of the relay unit.
Fig. 5 is a cross-sectional view of an essential part showing an embodiment different from the relay unit in Fig. 2.

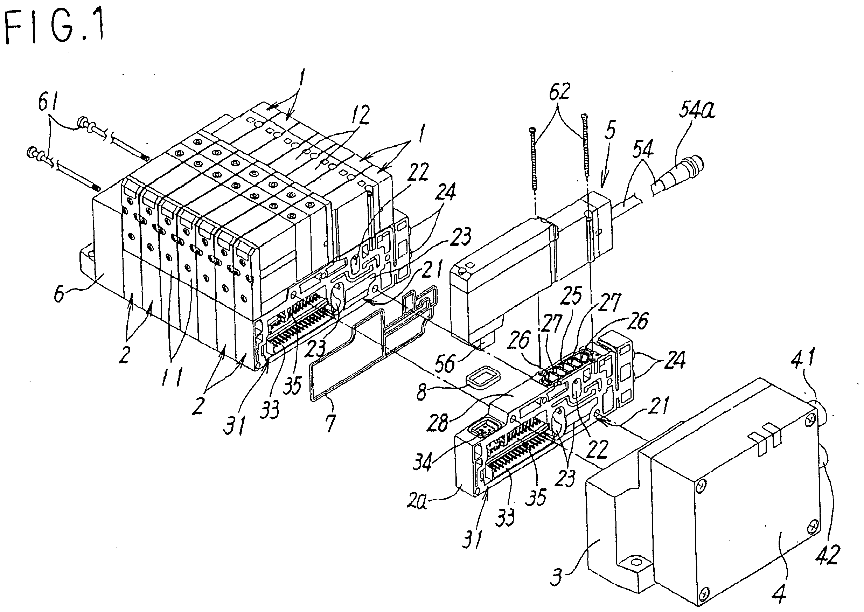

Fig. 1 shows an embodiment of a manifold-type solenoid valve with a relay unit. The manifold-type solenoid valve according to this embodiment has a plurality of solenoid valves 1 for controlling a fluid pressure device by switching channels of pressure fluids such as compressed air, a relay unit 5 for controlling an electrical device by a relay unit which is opened and closed, and a plurality of modular manifold blocks 2 connected together and each having the solenoid valve 1 and the relay unit 5 installed thereon. Such a manifold-block train has a supply/exhaust block 3 connected to one end thereof so as to supply therefrom each solenoid valve 1 with the pressure fluids through common channels 22 and 23 in each manifold block 2. In addition, the supply/exhaust block 3 has an intermediate block 4 attached thereto to feed therefrom electrical power for driving via each manifold block 2, while transmitting a serial signal to a circuit element provided for each manifold block 2 to switch a solenoid-valve driving circuit, thereby selectively controlling the solenoid valve 1 ON/OFF.

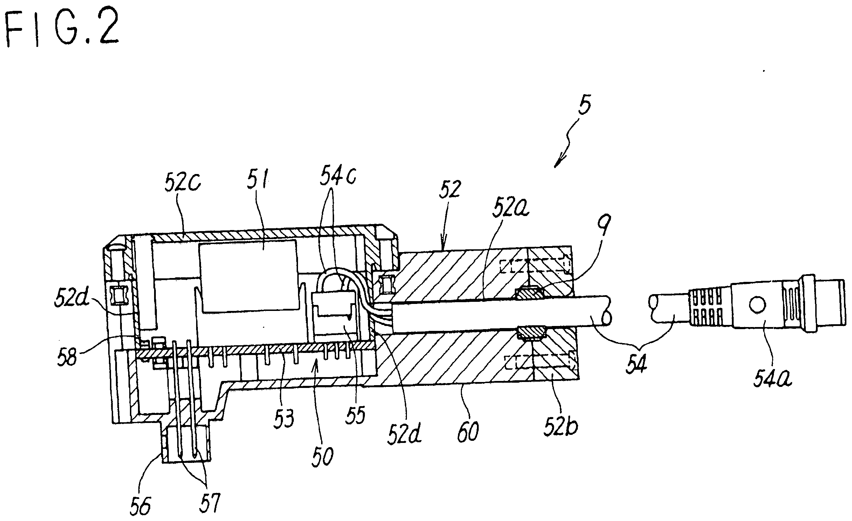

Part of the plurality of manifold blocks 2 having substantially the same shape and the same structure is used for installing the relay unit, wherein the manifold block 2a of the relay unit has the relay unit 5 installed thereon, as shown in Fig. 2, having a relay 51 for controlling the electrical device such as an electrical motor in a housing 52. The manifold block 2a is denoted by a common symbol "2", except when discriminating from the other manifold blocks for installing the solenoid valves.

In addition, the relay unit housing 52 preferably has the same or similar outward shape as/to the solenoid valve 1 when considering the overall design of the manifold-type solenoid valve. Further, in the embodiment in Fig. 1, the relay unit manifold block 2a is arranged at the end portion of the train so as to come into contact with the supply/exhaust block 3.

The solenoid valve 1 includes 3-port or 5-port type main valves 12 and one or more solenoids to drive the main valves 12 via pilot valves 11 electromagnetically driven by the solenoid or directly by the solenoid to switch the fluid channels, and is fixed on a mounting surface 28 on the manifold block 2 using screws.

In addition, a mounting surface of the bottom of the solenoid valve 1 corresponding to the manifold block 2 is provided with a power-receiving connector electrically connected to a power-feeding connector 34 on the mounting surface 28. The power-receiving connector has substantially the same structure as a power-receiving connector 56 of the relay unit 5, which will be described below.

Further, the solenoid valve 1 is preferably constructed in a manner such that any of the 3-port and 5-port solenoid valves has the same outward shape in which only the internal mechanism is different in order to use the common manifold block 2.

The manifold block 2 includes a fluid channel section 21 and an electrical circuit section 31. The fluid channel section 21 includes the common supply channel 22 and the two common exhaust channels 23 and 23, which bore through the manifold block 2 in a connecting direction and which are connected to channels in the supply/exhaust block 3 (not shown), two output ports 24 and 24 opened on one end surface in a longitudinal direction of the manifold block 2, and output channels for enabling output fluids from the solenoid valve 1 to flow in the output ports 24 and 24. In addition, the mounting surface 28 on the manifold block 2 has a supply channel hole 25, an exhaust channel hole 26, and an output channel hole 27 opened thereon for connecting the common channels and the output channels to supply/exhaust openings on a mounting surface at the bottom of the solenoid valve 1, respectively.

In addition, the electrical circuit section 31 includes a printed-circuit board 35 on which a circuit element and the like for switching a driving circuit of the solenoid valve by the serial signal from the intermediate block 4 are installed, a male connector 33 and a female connector (not shown) for receiving electrical power and for transmitting the serial signal, and the power-feeding connector 34 for feeding electrical power to the solenoid valve 1. These connectors are attached to the printed-circuit board 35, and are electrically connected together by printed wiring provided on the circuit board 35. The male connector 33 is placed on one side of the manifold block 2 and the female connector is placed on the opposite side of the male connector 33. When the manifold blocks are connected together, the male connector 33 and the female connector of the adjacent manifold blocks 2 and 2 are connected together.

The supply/exhaust block 3 includes a supply port and an exhaust port (not shown) on one end surface thereof, to which a supply coupling and an exhaust coupling are attached. These ports are each connected to the common supply channel 22 and the common exhaust channels 23 and 23 which bore through the manifold block 2, so that a supply fluid from the outside is supplied to the common supply channel 22, and an exhaust fluid from each solenoid valve 1 is exhausted through the common exhaust channels 23 and 23.

The intermediate block 4 attached to the supply/exhaust block 3 receives and relays the serial signal transmitted from a control system, and receives electrical power for driving from a power supply unit, and then transmits and supplies it to each manifold block 2 via connection terminals 41 and 42, while transmitting the serial signal and supplying the driving power to a control device such as other manifold-type solenoid valves.

The transmission of the serial signal and the power supply to each manifold block 2 by the intermediate block 4 are performed via the supply/exhaust block 3. That is, the supply/exhaust block 3 has the female connector (not shown) on the coupling surface thereof corresponding to the manifold block 2a, wherein the female connector is connected to the male connector 33 of the manifold block 2a, and is connected to the intermediate block 4.

An end block 6 attached to another end of the train of the manifold blocks 2 is connected to the supply/exhaust block 3 using tension bolts 61 to close end portions of the common channels 22 and 23 and the like provided by boring through the manifold blocks 2. Upon connection, gaskets 7 intervene between the manifold blocks 2, between the manifold block 2 and the supply/exhaust block 3, and between the manifold block 2 and the end block 6, to individually seal the fluid channel section 21 and the electrical circuit section 31 in the manifold block 2.

The end block 6 includes a male connector connected to the female connector of the adjacent manifold block 2. A serial signal transmitted via the male connector is converted to a return signal by a short-circuit line built in the end block 6, and is then transmitted to the intermediate block 4 via the male connector.

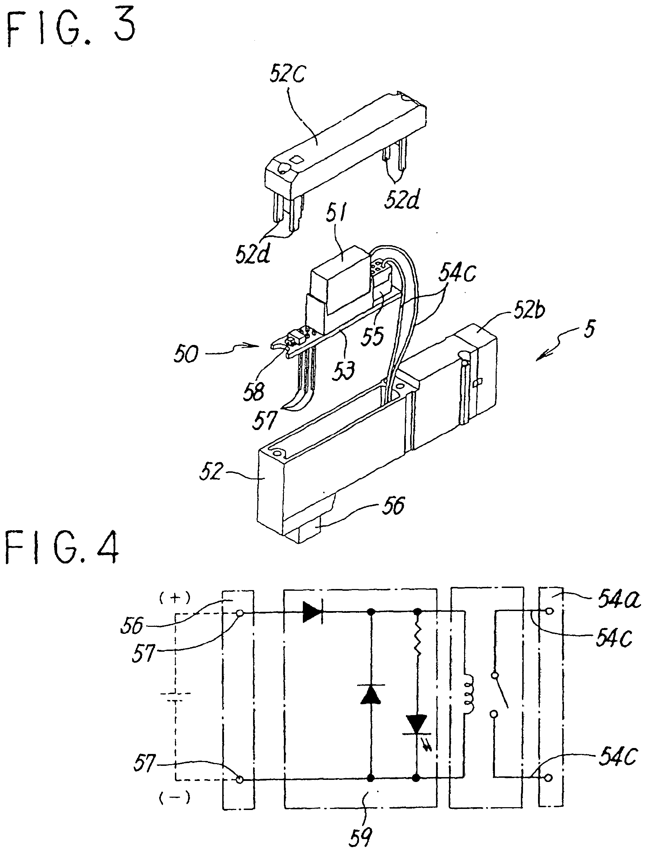

The relay unit 5 installed on the relay unit manifold block 2a is fixed on the mounting surface 28 of the manifold block using screws 62, and includes the housing 52 constructed to have substantially the same shape as the solenoid valve 1 so as not to stick out from the mounting surface 28 in a width direction, in which an electrical circuit member 50, which will be shown in detail in Fig. 2 and Fig. 4, is built in a hollow section thereof. The electrical circuit member 50 includes the following on a substrate 53: the relay 51 electromagnetically or electronically opened and closed (Fig. 4 shows an electromagnetic relay); an intermediate terminal 55 connected to the relay 51 by the wiring on the substrate 53; a cord 54 having conductors 54c from the intermediate terminal 55 therein; a power-receiving connector 56 having power-receiving terminals 57 electrically connected to the relay 51; and electronic parts 59 such as an indicator lamp 58, a diode, and a resistor. In addition, the electrical circuit member 50 is stably pressed by support sections 52d of a cover 52c to such an extent that it does not move in the housing 52 for air-tightly sealing an upper surface portion of the housing 52.

The mounting surface at the bottom of the housing 52 corresponding to the manifold block 2a is provided with the power-receiving connector 56 electrically connected to the power-feeding connector 34 of the manifold block 2a, and a channel-hole sealing section 60 for air-tightly sealing the supply channel hole 25, the exhaust channel hole 26, and the output channel hole 27, which are opened on the mounting surface 28 of the manifold block 2a.

The channel-hole sealing section 60 is formed in a manner such that the portion corresponding to each channel hole of the mounting surface of the housing 52 is made flat so as to press the entirety of each gasket attached to peripheries of the openings of channel holes, thereby air-tightly sealing each channel hole to maintain air-tightness of the common channels 22 and 23.

In addition, the housing 52 is constructed to maintain air-tightness in a manner such that the power-receiving connector 56 is connected via a sealing member 8 to the power-feeding connector 34 of the relay unit manifold block 2a, and the cord 54 is air-tightly sealed by an O-ring 9 attached to a lead-out section 52a of the housing 52. Specifically, as shown in Fig. 2, the O-ring 9 fitted to the cord 54 is pressed and deformed by an end plate 52b on the lead-out side of the cord 54 of the housing 52 so as to seal a gap between the lead-out section 52a and the cord.

The relay unit 5 is operated as the inner relay 51 receives electrical power from the power-feeding connector 34 of the manifold block 2a via the power-receiving connector 56 to turn on/off the electrical device connected to a plug 54a. The power supply to the relay 51 via the power-feeding connector 34 is controlled at the manifold block 2a by the serial signal from the intermediate block 4 in a manner similar to the case in the solenoid valve 1.

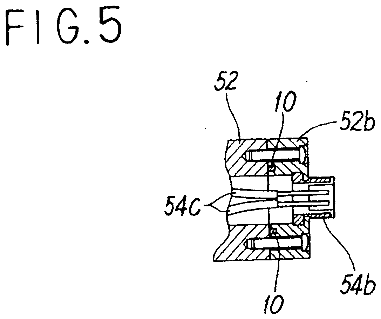

According to this embodiment, the relay unit 5 is constructed to allow the cord 54 from the relay 51 to be led out from the housing 52 and to output a driving signal and the like by the output plug 54a at the tip thereof, however, as shown in Fig. 5, it can also be constructed to have an output connector 54b on the end plate 52b for wiring in place of the output plug 54a, while connecting the conductors 54c of the cord 54 thereto.

In this case as well, it is necessary that the gaskets 10 intervene between the end plate 52b to which the output connector 54b is attached and the housing 52 so as to maintain air-tightness in the housing.

In the manifold-type solenoid valve having the foregoing construction, the serial signal from the control system and the electrical power for driving from the power supply unit are transmitted and supplied to the intermediate block 4 together, and are then transmitted and supplied to the manifold block 2 therefrom via an energizing mechanism, whereby the solenoid valve 1 and the relay unit 5 are driven based on the serial signal.

Since the relay unit 5 uses part of a plurality of manifold blocks 2 as a relay unit manifold block 2a to be installed thereon, and is integrally assembled to part of the manifold-type solenoid valve, there is no need to separately install the relay unit 5 in another place. Moreover, since parts can be used commonly, manufacturing costs can be reduced.

Further, since the relay unit 5 and the manifold-type solenoid valve are collected so as to unify the energizing mechanism, not only can the control system and the wiring be simplified, but also the relay unit 5 and the manifold-type solenoid valve can be simultaneously handled, thereby easily performing the installation and maintenance such as checking the operation.

In the above embodiment, only one relay unit 5 is used, however, it is also possible to use a plurality of relay units by increasing the number of relay unit manifold blocks 2a.

In addition, in this embodiment, the relay unit manifold block 2a is arranged at a position that comes into contact with the supply/exhaust block 3 at an end portion of the train, however, the position at which the manifold block 2a is installed may be any position in principal.

Further, in the embodiment, although the driving of the relay unit 5 and the solenoid valve 1 is controlled by the serial signal, it is also possible to use any control device that can control the power supply to the relay unit 5 and the solenoid valve 1 via the energizing mechanism of the driving power.

As described above in detaii, since the manifold-type solenoid valve uses one of a plurality of manifold blocks as a relay unit manifold block to install the relay unit thereon, the relay unit and the manifold-type solenoid valve can be integrated in one device so that it is possible not only to omit a separate installation location for the relay unit, but also to unify the energising mechanism, thereby simplifying the control system and the wiring. In addition, by integrating the relay unit and the manifold-type solenoid valve with respect to the installation location and the electricity, the relay unit and the solenoid valve can be simultaneously handled so that the installation and maintenance, such as checking the operation, can be easily performed.

## Claims

1. A manifold-type solenoid valve with a relay unit comprising a plurality of solenoid valves (1) each for controlling a fluid pressure device by switching channels, at least one relay unit (5) for controlling an electrical device by a relay that is opened and closed, and a plurality of manifold blocks (2) coupled together and each having one of the solenoid valves (1) or the relay unit (5) installed on a mounting surface (28) thereof and each having substantially the same construction, wherein the plurality of manifold blocks (2) each have a plurality of channel holes (25, 26, 27) for supplying pressure fluids to the solenoid valves (1) which are opened on the mounting surface (28) and a power-feeding connector (34) for connection to a power-receiving connector (56) of each solenoid valve, and wherein the relay unit (5) has a housing (52) which, when the relay unit (5) is installed on the mounting surface (28) of one of the manifold blocks (2) is within the width of the block, the relay (51) which is built into the housing (52) and is electrically opened and closed, a power-receiving connector (56) that can be connected to the power feeding connector (34) of the manifold block (2), and a sealing section (60) for sealing each channel hole on the mounting surface (28), the housing (52) constructed to have substantially the same shape as the solenoid valve (1) so as not to stick out from the mounting surface (28) in a width direction, in which an electrical circuit member (50), is built in a hollow section of the housing, wherein the electrical circuit member (50) includes the following on a substrate (53): the relay (51) electromagnetically or electronically opened and closed; an intermediate terminal (55) connected to the relay (51) by the wiring on the substrate (53); a cord (54) having conductors (54c) from the intermediate terminal (55) therein; a power-receiving connector (56) having power-receiving terminals (57) electrically connected to the relay (51); and electronic parts (59), wherein the electrical circuit member (50) is stably pressed by support sections (52d) of a cover (52c) to such an extent that it does not move in the housing (52) for air-tightly sealing an upper surface portion of the housing (52).

2. A manifold-type solenoid valve as claimed in Claim 1, wherein a lengthwise end of the housing (52) acts as an output surface for connecting the relay to the electrical device, and wherein the cord (54) or a connector which is connected to the relay extends from the output surface in an air-tightly sealed state.

3. A manifold-type solenoid valve as claimed in any preceding Claim, wherein the manifold blocks (2) each have a plurality of fluid channels (22, 23) which are each connected to one of the channel holes (25, 26, 27) on the mounting surface (28) and which are connected together by coupling of the manifold blocks (2), and a male connecter (33) and a female connector, which are electrically connected together for supplying/transmitting electrical power and a serial signal for controlling the solenoid valve (1), the male connecter (33) being provided on one side of the manifold block (2) and the female connector being provided on the opposite side thereof such that when the manifold blocks (2) are coupled, the male connector (33) and the female connector of the adjacent blocks are connected together.

4. A manifold-type solenoid valve as claimed in Claim 3, wherein including a supply/exhaust block (3) for supplying pressure fluid to each manifold block (2) and wherein the supply/exhaust block (3) has an intermediate unit (4) attached thereto for supplying electrical power and a serial signal transmitted from a control means to the connector of each manifold block (2).

## Patentansprüche

1. Magnetventilverteiler mit einer Relaiseinheit, umfassend mehrere Magnetventile (1) jeweils zum Steuern einer Fluiddruckvorrichtung durch Umschalten von Kanälen, wenigstens eine Relaiseinheit (5) zum Steuern einer elektrischen Vorrichtung durch ein Relais, das öffnet und schließt, und eine Vielzahl von Verteilerblöcken (2), die miteinander verbunden sind und bei denen jeweils eines der Magnetventile (1) oder die Relaiseinheit (5) auf einer Montagefläche (28) davon installiert ist und die jeweils im Wesentlichen denselben Aufbau haben, wobei die Vielzahl von Verteilerblöcken (2) jeweils eine Vielzahl von Kanallöchern (25, 26, 27) zum Zuführen von Druckfluiden zu den Magnetventilen (1), die an der Montagefläche (28) münden, und einen Stromzuführungsstecker (34) zum Anschluss an einen Stromaufnahmestecker (56) jedes Magnetventils aufweisen, und wobei die Relaiseinheit (5) ein Gehäuse (52), welches sich, wenn die Relaiseinheit (5) auf der Montagefläche (28) eines der Verteilerblöcke (2) installiert ist, innerhalb der Breite des Blocks befindet, das Relais (51), das in das Gehäuse (52) eingebaut ist und elektrisch geöffnet und geschlossen wird, einen Stromaufnahmestecker (56), der mit dem Stromzuführungsstecker (34) des Verteilerblocks (2) verbunden werden kann, und einen Abdichtungsabschnitt (60) zum Abdichten jedes Kanallochs an der Montagefläche (28) hat, wobei das Gehäuse (52) so aufgebaut ist, dass es im Wesentlichen die gleiche Form wie das Magnetventil (1) hat, damit es nicht in einer Breitenrichtung über die Montagefläche (28) übersteht, bei dem ein elektrisches Schaltkreiselement (50) in einem hohlförmigen Abschnitt des Gehäuses eingebaut ist, wobei das elektrische Schaltkreiselement (50) das Folgende auf einem Träger (53) aufweist: das Relais (51), das elektromagnetisch oder elektronisch öffnet und schließt; eine Zwischenklemme (55), die mit dem Relais (51) über die Verdrahtung auf dem Träger (53) verbunden ist; ein Kabel (54) mit Leitern (54c) von der Zwischenklemme (55) in ihm; einen Stromaufnahmestecker (56) mit Stromaufnahmeklemmen (57), die mit dem Relais (51) elektrisch verbunden sind; und elektronische Teile (59), wobei das elektrische Stromkreiselement (50) durch Trägerabschnitte (52d) einer Abdeckung (52c) in einer Weise stabil gehalten wird, dass es sich zum luftdichten Abdichten eines oberen Flächenabschnitts des Gehäuses (52) in dem Gehäuse (52) nicht bewegen kann.

2. Magnetventilverteiler nach Anspruch 1, wobei ein Längsende des Gehäuses (52) als Ausgabefläche zum Verbinden des Relais mit der elektrischen Vorrichtung wirkt und wobei das Kabel (54) oder ein Verbinder, der mit dem Relais verbunden ist, sich in luftdicht abgedichtetem Zustand aus der Ausgabefläche erstreckt.

3. Magnetventilverteiler nach einem der vorhergehenden Ansprüche, bei dem die Verteilerblöcke (2) jeweils eine Vielzahl von Fluidkanälen (22, 23), die jeweils mit einem der Kanallöcher (25, 26, 27) an der Montagefläche (28) verbunden sind und die durch Kopplung der Verteilerblöcke (2) miteinander verbunden werden, und eine Messerleiste (33) und eine Federleiste haben, die elektrisch miteinander verbunden sind zum Zuführen/Senden von elektrischem Strom und einem seriellen Signal zum Steuern des Magnetventils (1), wobei die Messerleiste (33) an einer Seite des Verteilerblocks (2) angeordnet ist und die Federleiste auf der entgegengesetzten Seite von ihm angeordnet ist, so dass beim Zusammenstecken der Verteilerblöcke (2) die Messerleiste (33) und die Federleiste der benachbarten Blöcke miteinander verbunden werden.

4. Magnetventilverteiler nach Anspruch 3, zu dem ein Zuleitungs-/Ableitungsblock (3) zum Zuführen von Druckfluid zu jedem Verteilerblock (2) gehört und wobei der Zuleitungs-/Ableitungsblock (3) eine Zwischenvorrichtung (4) hat, die zum Zuführen von elektrischem Strom und eines elektrischen Signals, das von einer Steuervorrichtung zum Steckverbinder jedes Verteilerblocks (2) übertragen wird, daran angebracht ist.

## Revendications

1. Electrovanne du type à collecteurs à unité de relais comprenant une pluralité d'électrovannes (1) servant chacune à commander un dispositif de pression de fluide par commutation de canaux, au moins une unité de relais (5) pour commander un dispositif électrique par un relais qui est ouvert et fermé, et une pluralité de blocs collecteurs (2) couplés ensemble et comportant chacun une des électrovannes ou l'unité de relais (5) installée sur une surface de montage (28) de celui-ci et ayant chacun sensiblement la même construction, dans laquelle les blocs de la pluralité de blocs collecteurs (2) présentent chacun une pluralité d'orifices de canaux (25, 26, 27) pour fournir des fluides sous pression aux électrovannes (1) qui sont ouverts sur la surface de montage (28) et un connecteur d'alimentation de courant (34) pour la connexion à un connecteur de réception de courant (56) de chaque électrovanne, et dans laquelle l'unité de relais (5) présente un boîtier (52) qui, quand l'unité de relais (5) est installée sur la surface de montage (28) de l'un des blocs collecteurs (2), est en-deçà de la largeur du bloc, le relais (51) qui est construit dans le boîtier (52) et est ouvert et fermé électriquement, un connecteur de réception de courant (56) qui peut être connecté au connecteur d'alimentation de courant (34) du bloc collecteur (2), et une section d'étanchéité (60) pour sceller chaque orifice de canal sur la surface de montage (28), le boîtier (52) étant construit pour avoir sensiblement la même forme que l'électrovanne (1) de manière à ne pas dépasser de la surface de montage (28) dans un sens de largeur, dans laquelle un élément de circuit électrique (50) est construit dans une section creuse du boîtier, dans laquelle l'élément de circuit électrique (50) comporte les éléments suivants sur un substrat (53) : le relais (51) ouvert et fermé électromagnétiquement ou électroniquement ; une borne intermédiaire (55) connectée au relais (51) par le câblage sur le substrat (53) ; un câble (54) présentant des conducteurs (54c) partant de la borne intermédiaire (55) dans celui-ci ; un connecteur de réception de courant (56) présentant des bornes de réception de courant (57) connectées électriquement au relais (51) ; et des pièces électroniques (59), dans laquelle l'élément de circuit électrique (50) est pressé de manière stable par des sections de support (52d) d'un couvercle (52c) de manière à ne pas se déplacer dans le boîtier (52) en vue d'un scellement étanche à l'air d'une partie de surface supérieure du boîtier (52).

2. Electrovanne du type à collecteurs selon la revendication 1, dans laquelle une extrémité dans le sens de la longueur du boîtier (52) fait office de surface de sortie pour connecter le relais au dispositif électrique, et dans laquelle le câble (54) ou un connecteur qui est connecté au relais s'étend depuis la surface de sortie dans un état scellé étanche à l'air.

3. Electrovanne du type à collecteurs selon n'importe quelle revendication précédente, dans laquelle les blocs collecteurs (2) présentent chacun une pluralité de canaux de fluide (22, 23) qui sont chacun raccordés à un des orifices de canaux (25, 26, 27) sur la surface de montage (28) et qui sont raccordés ensemble par accouplement des blocs collecteurs (2), et un connecteur mâle (33) et un connecteur femelle, lesquels sont connectés électriquement ensemble pour fournir/transmettre un courant électrique et un signal sériel pour commander l'électrovanne (1), le connecteur mâle (33) étant fourni sur un côté du bloc collecteur (2) et le connecteur femelle étant fourni sur le côté opposé de celui-ci de telle sorte que quand les blocs collecteurs (2) sont couplés, le connecteur mâle (33) et le connecteur femelle des blocs adjacents soient connectés ensemble.

4. Electrovanne du type à collecteurs selon la revendication 3, comportant un bloc d'alimentation/échappement (3) pour alimenter un fluide sous pression à chaque bloc collecteur (2) et dans lequel le bloc d'alimentation/échappement (3) présente une unité intermédiaire (4) rattachée à celui-ci pour fournir un courant électrique et un signal sériel transmis par un moyen de commande au connecteur de chaque bloc collecteur (2).
